# EUROPEAN PATENT APPLICATION

(11) **EP 4 632 876 A1**
(43) Date of publication of application: **15.10.2025**
(21) Application number: 24219624.4
(22) Date of filing: 12.12.2024
(51) Int. Cl.: H01M 10/613, H01M 10/625, H01M 10/6552, H01M 10/6555, H01M 10/6569, H01M 50/211

(54) **BATTERY MODULE COMPRISING BARRIER AND BATTERY PACK COMPRISING THE SAME**

(30) Priority: 09.04.2024 KR 20240047904
(71) Applicant: SK On Co., Ltd., Seoul 03161 (KR)
(72) Inventor: HONG, Seung Gee, 34124 Daejeon (KR); KIM, Tae Il, 34124 Daejeon (KR)
(74) Representative: Prüfer & Partner mbB Patentanwälte · Rechtsanwälte

(57) **Abstract**

A battery module includes: a cell assembly including a plurality of cell blocks respectively including a plurality of battery cells, and a barrier disposed between the plurality of cell blocks; and a module housing accommodating the cell assembly. The barrier may include a phase change material including water, and a rigid member accommodating the phase change material, and the volume of water relative to a capacity of one of the plurality of cell blocks may be 1.000 cc/Ah or more.

## Description

### TECHNICAL FIELD

The present disclosure relates to a battery module including a barrier and a battery pack including the same.

### BACKGROUND

A secondary battery, unlike a primary battery, may be charged and discharged, so the secondary battery may be applied to devices within various fields such as digital cameras, mobile phones, laptops, hybrid cars, electric cars, and energy storage systems (ESS).

Secondary batteries are manufactured as flexible pouch-type battery cells or rigid square or cylindrical can-type battery cells. A plurality of battery cells can be formed into a cell assembly in a stacked form.

The cell assembly may be disposed inside the case to form a battery module, and a plurality of battery modules may be arranged inside the pack housing to form a battery pack.

### SUMMARY

A battery module may include a plurality of cell blocks, respectively including a plurality of battery cells. Heat, gas, or flames generated in one battery cell among the plurality of battery cells may propagate to other battery cells in adjacent cell blocks, resulting in thermal runaway or thermal propagation.

According to an aspect of the present disclosure, a battery module a battery pack comprising the same that can delay or prevent thermal runaway or thermal propagation between a plurality of cell blocks, may be provided.

The battery module and battery pack of the present disclosure may be widely applied in green technology fields such as to electric vehicles, battery charging stations, and solar and wind power generation using batteries. In addition, the battery module and battery pack of the present disclosure may be used in eco-friendly electric vehicles, hybrid vehicles, and the like, to prevent climate change by suppressing air pollution and greenhouse gas emissions.

According to the present disclosure, a battery module may include: a cell assembly including a plurality of cell blocks respectively including a plurality of battery cells, and a barrier disposed between the plurality of cell blocks; and a module housing accommodating the cell assembly. The barrier may include a phase change material including water, and a rigid member accommodating the phase change material. The volume of water relative to a capacity of one of the plurality of cell blocks may be 1,000 cc/Ah or more.

In an embodiment, the volume of water relative to the capacity of one of the plurality of cell blocks may be from 1.000 cc/Ah to 1.375 cc/Ah.

In an embodiment, the rigid member may include a first plate and a second plate coupled to the first plate. The phase change material may be disposed between the first plate and the second plate.

In an embodiment, the barrier may include an accommodating pouch disposed between the first plate and the second plate, and surrounding the phase change material.

In an embodiment, the rigid member may include a phase change material accommodating portion contacting the phase change material and surrounding at least a portion of the phase change material, and a cover covering the phase change material and coupled to the phase change material accommodating portion.

In an embodiment, the phase change material accommodating portion and the cover may form an internal space for accommodating the phase change material. The phase change material accommodating portion may include an opening extending from the internal space to the exterior of the rigid member. The barrier may include a sealing member sealing the opening.

In an embodiment, the cover may be coupled to the phase change material accommodating portion by welding or thermal fusion.

In an embodiment, each of the plurality of battery cells may include an electrode assembly, a pouch accommodating the electrode assembly, and an electrode tab electrically connected to the electrode assembly.

In an embodiment, the plurality of cell blocks may include a first cell block, a second cell block, and a third cell block spaced apart from each other. The barrier may include a first barrier disposed between the first cell block and the second cell block, and a second barrier disposed between the second cell block and the third cell block.

In an embodiment, the battery module may further include a cooling plate disposed between the cell assembly and the module housing.

A battery pack of the present disclosure may include a plurality of battery modules and a pack frame accommodating the plurality of battery modules. The plurality of battery modules may include a plurality of cell blocks respectively including a plurality of battery cells, a cell assembly including a barrier disposed between the plurality of cell blocks, and a module housing accommodating the cell assembly, respectively. The barrier may include a phase change material including water, and a rigid member accommodating the phase change material. The volume of water relative to a capacity of one of the plurality of cell blocks may be 1,000 cc/Ah or more.

According to an embodiment, the battery pack may further include a pack cooling plate disposed between the plurality of battery modules and the pack frame.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a perspective view of a battery cell according to an embodiment.
FIG. 2 is a perspective view of a battery module according to an embodiment.
FIG. 3 is an exploded perspective view of a battery module according to an embodiment.
FIG. 4 is an exploded perspective view of a cell assembly according to an embodiment.
FIG. 5 is an exploded perspective view of a barrier according to an embodiment.
FIG. 6 is a schematic cross-sectional view of a barrier according to an embodiment.
FIG. 7 is a graph illustrating a temperature of a battery cell according to a capacity of a phase change material according to an embodiment.
FIG. 8 is a graph illustrating a thermal runaway delay time according to a volume of water relative to a capacity of a cell block according to an embodiment.
FIG. 9 is an exploded perspective view of a barrier according to another embodiment.
FIG. 10 is a perspective view of a barrier according to another embodiment.
FIG. 11 is a schematic cross-sectional view of a barrier according to another embodiment.
FIG. 12 is an exploded perspective view of a battery pack according to an embodiment.

### DETAILED DESCRIPTION

Hereinafter, the present disclosure will be described in detail with reference to the attached drawings. However, this is merely an example and the present disclosure is not limited to the specific embodiments described as an example.

The terms or words used in the present specification and claims described below should not be construed as being limited to common or dictionary meanings. The inventor intends to use his/her invention in the best way possible.

Accordingly, it will be understood that the embodiments described in the present specification and the configurations illustrated in the drawings are only the most preferred embodiments of the present disclosure and do not represent all of the technical ideas of the present disclosure, and that there may be various equivalents and modified examples that can replace them at the time of filing the present specification.

Detailed descriptions of known functions and configurations that may obscure the gist of the present disclosure may be omitted in the attached drawings. In the accompanying drawings, some components are exaggerated, omitted, or schematically shown, and the size of each component does not entirely reflect the actual size.

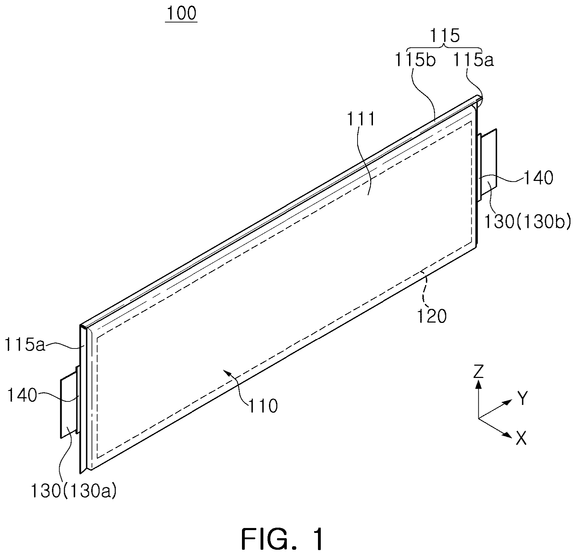

FIG. 1 is a perspective view of a battery cell according to an embodiment.

Referring to FIG. 1, a battery cell 100 may include an electrode assembly 120, a pouch 110 accommodating the electrode assembly 120, and an electrode tab 130 electrically connected to the electrode assembly 120. The battery cell 100 may be a secondary battery. For example, the battery cell 100 may be a lithium ion battery, but the present disclosure is not limited thereto. For example, the battery cell 100 may be a nickel-cadmium battery, a nickel-cobalt-manganese battery, a nickel-metal hydride battery, a nickel-hydrogen battery, or a lithium-iron phosphate battery that can be charged and discharged.

The pouch 110 may form at least a portion of an exterior of the battery cell 100. The pouch 110 may include an electrode accommodating portion 111 accommodating the electrode assembly 120 and a sealing portion 115 sealing at least a portion of a circumferential surface of the electrode accommodating portion 111. The electrode accommodating portion 111 may provide a space in which the electrode assembly 120 and an electrolyte are accommodated.

The sealing portion 115 may be formed by bonding at least a portion of a circumferential surface of the pouch 110. The sealing portion 115 may be formed in a flange shape extending outwardly from the electrode accommodating portion 111 formed in the shape of a container, and may be disposed along at least a portion of an outer peripheral surface of the electrode accommodating portion 111.

In an embodiment, the sealing portion 115 may include a first sealing portion 115a on which an electrode tab 130 is disposed and a second sealing portion 115b on which an electrode tab 130 is not disposed. A portion of the electrode tab 130 may be withdrawn or exposed externally of the pouch 110.

In a position in which the electrode tab 130 is withdrawn, in order to increase a sealing degree of the first sealing portion 115a and at the same time secure an electrical insulation state, the electrode tab 130 may be covered by an insulating film 140. The insulating film 140 may be formed of a film material thinner than that of the electrode tab 130, and may be attached to both surfaces of the electrode tab 130. In an embodiment, the electrode tab 130 may be disposed on both sides of the battery cell 100 a longitudinal direction (Y-axis direction), to face opposite directions. For example, the electrode tab 130 may include a first electrode tab 130a (e.g., a cathode tab) of a first polarity (e.g., a cathode) facing one side of the battery cell 100 in the longitudinal direction and a second electrode tab 130b of a second polarity (e.g., an anode) facing the other side thereof in the longitudinal direction. In the embodiment illustrated in FIG. 1, the sealing portion 115 may include two first sealing portions 115a on which an electrode tab 130 is disposed and one second sealing portion 115b on which an electrode tab 130 is not disposed. The first sealing portion 115a may seal at least a portion of the electrode tab 130. In an embodiment, the electrode tab 130 may be referred to as an electrode lead. A direction in which the electrode tab 130 is disposed may be selectively designed. In an embodiment (e.g., FIG. 1), the electrode tab 130 may include a first electrode tab 130a and a second electrode tab 130b disposed in an opposite direction of the first electrode tab 130a with respect to the electrode assembly 120. In FIG. 1, the electrode tab 130 are illustrated, which is disposed to face opposite directions on both sides of the battery cell 100 in a longitudinal direction (e.g., Y-axis direction), but a structure of the electrode tab 130 is not limited thereto. For example, the two electrode tabs 130 may be arranged substantially parallel in the longitudinal direction (e.g., Y-axis direction) of the battery cell 100.

Meanwhile, the pouch 110 is not limited to a structure in which a single sheet of exterior material is folded to form a sealing portion 115 on three sides as shown in FIG. 1.

In an embodiment of the present disclosure, at least a portion of the sealing portion 115 may be formed in a folded form at least once. By folding at least a portion of the sealing portion 115, the bonding reliability of the sealing portion 115 may be improved, and an area of the sealing portion 115 may be minimized. According to an embodiment, a second sealing portion 115b among the sealing portions 115, in which the electrode tab 130 is not disposed may be fixed by an adhesive member (not shown) after being folded twice. An angle at which the second sealing portion 115b is bent or the number of times in which the second sealing portion 115b is bent may be changed. For example, in an embodiment not shown, the second sealing portion 115b may be folded 90° relative to the first sealing portion 115a.

The electrode assembly 120 may include a cathode plate, an anode plate, and a separator. The separator may prevent contact between the cathode plate and the anode plate. Those skilled in the art will appreciate that the electrode assembly 120 may be manufactured using various methods. According to exemplary embodiments, the electrode assembly may be formed by repeatedly disposing a cathode, an anode, and a separator. In some embodiments, the electrode assembly may be of a winding type, a stacking type, a z-folding type, or a stack-folding type.

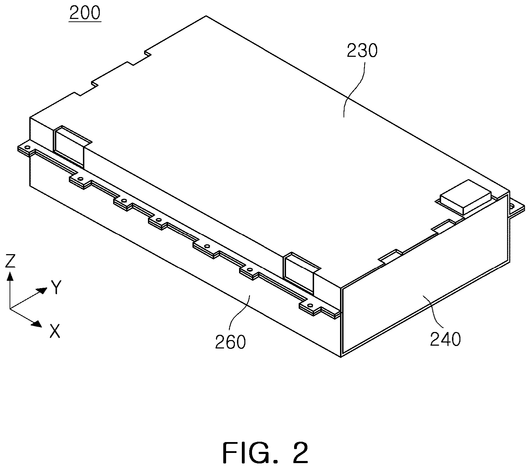

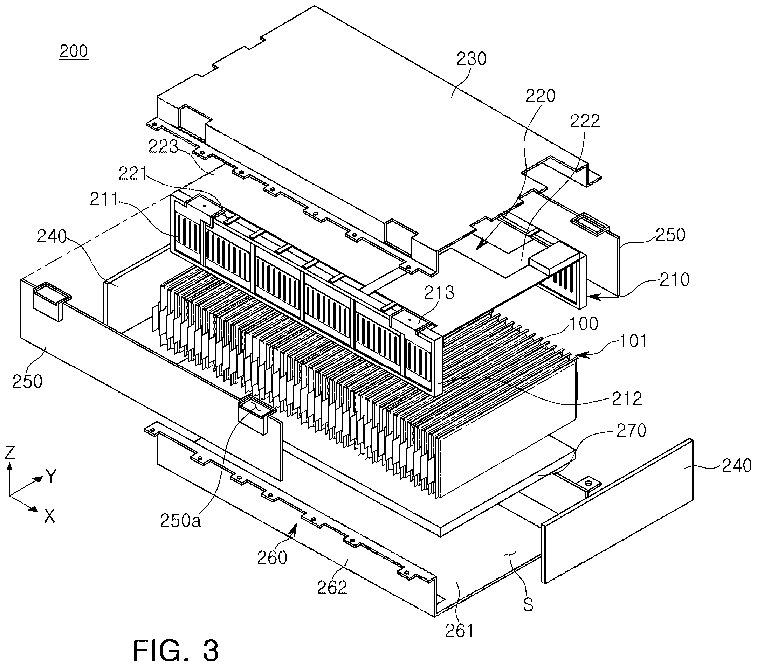

FIG. 2 is a perspective view of a battery module according to an embodiment. FIG. 3 is an exploded perspective view of a battery module according to an embodiment.

Referring to FIG. 2 and/or FIG. 3, a battery module 200 may include a cell assembly 101, a busbar assembly 210, a sensor assembly 220, a cover 230, an end plate 240, an insulating cover 250, and/or a module housing 260.

The cell assembly 101 may include a plurality of battery cells 100. The description of the battery cell 100 of FIG. 1 may be applied to the battery cell 100 of FIG. 3.

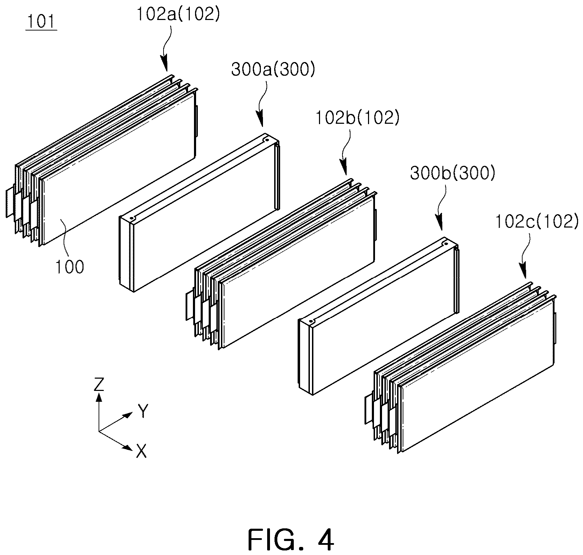

The cell assembly 101 may have a substantially hexahedral shape. In an embodiment, the cell assembly 101 may be referred to as a cell stack. In an embodiment, the cell assembly 101 may include a plurality of battery cells 100 connected thereto using adhesive tape. The cell assembly 101 may include a plurality of cell blocks (e.g., cell blocks 102 of FIG. 4) and a barrier (e.g., barrier 300 of FIG. 4) disposed between the plurality of cell blocks 102. The cell assembly 101 is further described below.

The busbar assembly 210 may include an electrically conductive busbar 211 electrically connected to an electrode tab 130 of the battery cell 100 and a busbar frame 212 supporting the busbar 211. The busbar frame 212 may be formed of an electrically insulating material (e.g., a polymer). The busbar frame 212 may include at least one fastening hole for receiving a fastening component (e.g., a screw, a rivet, and/or a boss structure). By the fastening component, the busbar frame 212 may be coupled to a portion of the module housing 260 (e.g., a sidewall 262). In an embodiment, the busbar 211 may be referred to as an inner busbar.

The busbar assembly 210 may include at least one terminal busbar 213 for electrical connection to the exterior. The electrode tab 130 of the battery cell 100 may be electrically connected to the exterior of the battery module 200 through the busbar 211 and the terminal busbar 213. For example, the terminal busbar 213 may be electrically connected to the busbar 211, and current of the battery cell 100 may be transmitted externally of the battery module 200 through the busbar 211 and the terminal busbar 213. The terminal busbar 213 may be exposed externally of a module housing 260 through a hole 250a of the insulating cover 250. In an embodiment, the terminal busbar 213 may be referred to as a high-voltage busbar.

The sensor assembly 220 may include a sensor for detecting information of the battery module 200. For example, the sensor assembly 220 may include a temperature sensor (not shown) and at least one voltage detection terminal 221 connected to a busbar 211. The sensor assembly 220 may include a flexible printed circuit board 222 connected to a voltage sensing terminal 221, and a circuit insulating member 223 supporting the flexible printed circuit board.

The cover 230 may cover a portion (e.g., an upper portion) of the cell assembly 101. For example, the cover 230 may may be disposed on one side of the cell assembly 101. The cover 230 may protect the cell assembly 101 from external impact of the battery module 200. In an embodiment, the cover 230 may be referred to as an upper cover or a module cover. The cover 230 may be connected or assembled with the module housing 260, the end plate 240, and/or the insulating cover 250.

The end plate 240 may surround at least a portion of the cell assembly 101. In an embodiment, the end plate 240 may be connected to an end of the main plate 261 and the sidewall 262 in a longitudinal direction (e.g., X-axis direction).

The end plate 240 may protect the cell assembly 101 from external impact of the battery module 200. The end plate 240 may cover a portion of the side of the cell assembly 101. The insulating cover 250 may prevent contact between at least a portion of the busbar assembly 210(e.g., the terminal busbar 213) and the module housing 260 (e.g., the sidewall 262). For example, at least a portion of the insulating cover 250 may be disposed between the terminal busbar 213 and the sidewall 262. The insulating cover 250 may be formed of an insulating material (e.g., a high molecular polymer) and may prevent current conduction due to the contact between the terminal busbar 213 and the sidewall 262. In an embodiment, the insulating cover 250 may be disposed between the cell assembly 101 and the sidewall 262.

The module housing 260 may form at least a portion of an exterior of the battery module 200. The module housing 260 may accommodate a cell assembly 101. For example, the module housing 260 may form an accommodating space (S) accommodating the cell assembly 101 and/or the busbar assembly 210. The module housing 260 may protect the cell assembly 101 from external impact. For example, the module housing 260 may include a main plate 261 supporting the cell assembly 101 and a sidewall 262 extending in an upward direction (e.g., in a +Z direction) from the main plate 261. In an embodiment, the main plate 261 may be referred to as a bottom plate. The cell assembly 101 may be mounted on the main plate 261. The sidewall 262 may cover at least a portion of a side surface of the cell assembly 101. For example, the sidewall 262 may extend in the upward direction from both edges of the cell assembly 101. The sidewall 262 may be formed integrally with the main plate 261. At least a portion of the accommodating space (S) may be surrounded by the module housing 260 (e.g., the main plate 261 and the sidewall 262), the end plate 240, and the cover 230.

In an embodiment, the module housing 260 may be formed of a material having high thermal conductivity, such as metal. For example, the module housing 260 may be formed of aluminum or stainless steel. However, the material of the module housing 260 is not limited thereto. According to another embodiment, the module housing 260 may be formed of a polymer. The module housing 260 may be referred to as a housing, a case, or a module case.

According to an embodiment, the battery module 200 may further include a cooling plate 270 for cooling the cell assembly 101. For example, at least a portion of the heat generated by the battery cell 100 of the cell assembly 101 may be transferred to the cooling plate 270. At least a portion of the heat transferred to the cooling plate 270 may be discharged externally of the battery module 200 through the module housing 260 and/or cover 230. The cooling plate 270 may be a water-cooled or air-cooled cooling member. The shape and/or location of the cooling plate 270 of the present disclosure is exemplary. In an embodiment, the cooling plate 270 may be located at the bottom of the cell assembly 101. For example, the cooling plate 270 may be disposed between the cell assembly 101 and the module housing 260 (e.g., a main plate 261). In an embodiment (not shown), the cooling plate 270 may be disposed above the cell assembly 101. For example, the cooling plate 270 may be disposed between the cell assembly 101 and the cover 230. In an embodiment, the cooling plate 270 may be referred to as a heat dissipation plate. In an embodiment, the cooling plate 270 may be in contact with a barrier (e.g., the barrier 300 of FIG. 4). By the barrier 300 and the cooling plate 270, a heat dissipation effect of the battery module 200 may be improved.

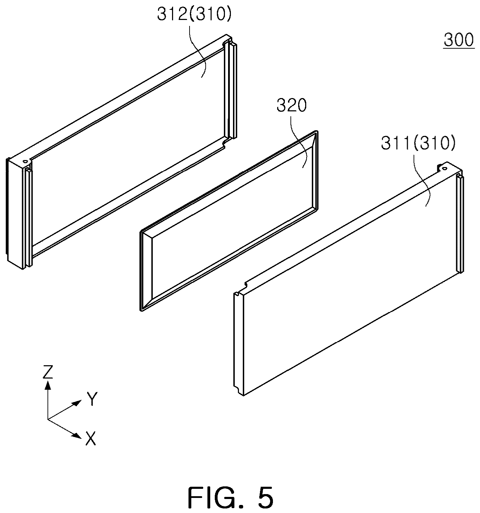

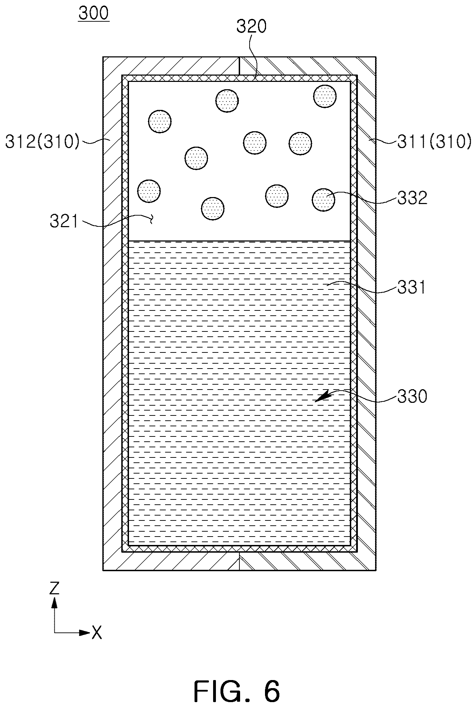

FIG. 4 is an exploded perspective view of a cell assembly according to an embodiment. FIG. 5 is an exploded perspective view of a barrier according to according to an embodiment. FIG. 6 is a schematic cross-sectional view of a barrier according to an embodiment.

Referring to FIGS. 4, 5, and/or 6, the cell assembly 101 may include a plurality of cell blocks 102 respectively including a plurality of battery cells 100 and a barrier 100 disposed between the plurality of cell blocks 102. The description of the battery cell 100 of FIG. 1 and the cell assembly 101 of FIG. 3 may be applied to the battery cell 100 of FIG. 4.

The cell block 102 may include a plurality of battery cells 100. In an embodiment, the cell block 102 may be an assembly of a plurality (e.g., four) battery cells connected by a bonding member (e.g., adhesive tape). The number of battery cells 100 included in the cell block 102 may be selectively designed. In an embodiment, the cell block 102 may be referred to as a battery sub-module.

The barrier 300 may delay thermal runaway between the plurality of cell 102, and prevent thermal runaway between the plurality of cell blocks 102. The barrier 300 may absorb at least a portion of the heat generated in the battery cell 100. The barrier 300 may reduce an amount of heat generated in one cell block 102 (e.g., a trigger cell block) which is transferred to another cell block (e.g., an adjacent cell block). In an embodiment, the barrier 300 may be referred to as a thermal barrier, a thermal runaway delay member, or a thermal propagation delay member.

The barrier 300 may include a phase change material 330 including water 331 and 332. The phase change material 330 may absorb at least a portion of the heat generated from the battery cell 100, and may be phase-changed based on the absorbed heat. For example, the phase change material 330 may include liquid water 331 and gaseous water 332 (e.g., water vapor). When heat is generated by the cell block 102 adjacent to the barrier 300, the liquid water 331 of the phase change material 330 may absorb sensible heat. At least a portion of the liquid water 331 of the phase change material 330 may be evaporated into gaseous water 332. The liquid water 331 may be vaporized into gaseous water 332. When liquid water 331 changes into gaseous water 332, the liquid water 331 may absorb latent heat. In an embodiment, the phase change material 330 may be referred to as an endothermic material or a phase change member.

In an embodiment, the phase change material 330 may include a hydrogel. A hydrogel is a synthetic polymer material that can absorb water equivalent to tens to thousands of times its own mass, and may refer to a polymer that has the property of absorbing fluid and turning into a gel. For example, the hydrogel may include at least one of an absorbent polymer (or super absorbent polymer), polyacryl amide, polyacrylic acid, polymethacrylic acid, polyethylene oxide, polyvinyl alcohol, gelatin, polysaccharides, sodium carboxyl methyl cellulose, and chitosan. However, the above-described materials are only some example materials forming the hydrogel according to the embodiments, and the hydrogel may be formed of any material that has the function for absorbing fluid and retaining the absorbed fluid under a certain pressure. The hydrogel included in the phase change material 330 according to the embodiments may be provided in a semi-solid gel state that has absorbed liquid (e.g., water), and the liquid absorbed in the hydrogel may absorb heat energy from the surrounding environment.

The barrier 300 may include a rigid member 310 accommodating a phase change material 330. In an embodiment, the rigid member 310 may contact a battery cell 100 of a cell block 102. The rigid member 310 may pressurize the battery cell 100.

The rigid member 310 may include a material that maintains the shape even at a temperature equal to or higher than a specified temperature (e.g., 800 °C). For example, the rigid member 310 may include at least one of a thermosetting polymer material, polyphenylene sulfide, mica, gypsum, and a metal (e.g., aluminum). However, a material of the rigid member 310 is not limited thereto, and may be formed of any material that can maintain the shape even when heat is applied. The rigid member 310 includes a material having fire resistance, and may prevent flames or gas generated by the battery block 102 from being transferred to other battery blocks 102.

The rigid member 310 may have a shape for accommodating an accommodating pouch 320 and/or a phase change material 330 therein. For example, the rigid member 310 may include a first plate 311 and a second plate 312 coupled (or bonded) to the first plate 311. The first plate 311 and the second plate 312 may be coupled using a fastening member (e.g., a bolt) (not shown). However, as an example of the method by which the first plate 311 and the second plate 312 are coupled, the first plate 311 and the second plate 312 can be coupled using a bolt, a snap fit, or a fusion. The phase change material 330 may be disposed between the first plate 311 and the second plate 312.

In an embodiment, the barrier 300 may include an accommodating pouch 320 surrounding the phase change material 330. The accommodating pouch 320 may provide an internal space 321 in which the phase change material 330 is disposed. The accommodating pouch 320 may be located (disposed?) within the rigid member 310. For example, the accommodating pouch 320 may be disposed between the phase change material 330 and the rigid member 310. The accommodating pouch 320 may be disposed between the first plate 311 and the second plate 312.

The accommodating pouch 320 may be manufactured from a material preventing the phase change material 330 from leaking out or foreign substances from being introduced. For example, the accommodating pouch 320 may include aluminum. However, the material of the receiving pouch 320 is exemplary.

The number of cell blocks 102 and the number of barriers 300 may be designed selectively. For example, in an embodiment, the plurality of cell blocks 102 may include a first cell block 102a, a second cell block 102b, and a third cell block 102c spaced apart from each other. The barrier 300 may include a first barrier 300a disposed between the first cell block 102a and the second cell block 102b, and a second barrier 300b disposed between the second cell block 102b and the third cell block 102c.

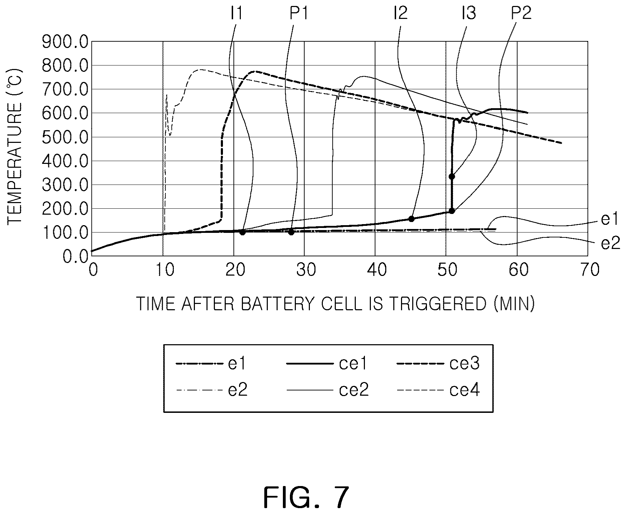

FIG. 7 is a graph illustrating a temperature of a battery cell according to a capacity of a phase change material, according to an embodiment.

Referring to FIG. 7, along with FIGS. 4, 5, and 6, the temperature of the battery cell 100 may be changed based on the capacity of the phase change material 330 included in the barrier 300 and a time after the battery cell 100 is triggered (e.g., ignited).

A first experimental example (e1) illustrates the temperature of the battery cell 100, in a cell assembly 101 including 550 cc of water and including a barrier 300 disposed on a left side of the cell block 102. A second experimental example (e2) illustrates the temperature of the battery cell 100, in a cell assembly 101 including 550 cc of water and including a barrier 300 disposed on a right side of the cell block 102.

Referring to the experimental examples (e1 and e2), a barrier 300 including water 331 and 332 of a specified amount or greater may delay or prevent thermal runaway or thermal propagation between cell blocks 102. For example, in the experimental examples (e1 and e2), the barrier 300 may absorb an amount of heat generated by the battery cell 100 by utilizing the phase change process of water 331 and 332. The barrier 300 of the experimental examples (e1 and e2) may maintain the temperature of the battery cell 100 equal to or lower than a first temperature point P1 (e.g., 100°C) at which water (331 and 332) vaporizes.

The first comparative experimental example (ce1) illustrates the temperature of a battery cell 100 in a cell assembly 101 including 400 cc of water and including a barrier 300 disposed on a right side of the cell block 102. The second comparative experimental example (ce2) illustrates the temperature of a battery cell 100 in a cell assembly 101 including 400 cc of water and including a barrier 300 disposed on a left side of the cell block 102. The third comparative experimental example (ce3) illustrates the temperature of a battery cell 100 in a cell assembly 101 including 250 cc of water and including a barrier 300 disposed on a left side of the cell block 102. The fourth comparative experimental example (ce4) illustrates the temperature of a battery cell 100 in a cell assembly 101 including 250 cc of water and including a barrier 300 disposed on a right side of the cell block 102.

Referring to the experimental examples (e1 and e2) and comparative examples (ce1, ce2, ce3, and ce4), in a barrier 300 including water 331 and 332 less than a specified size, thermal runaway or heat propagation between cell blocks 102 may occur. For example, in the comparative examples (ce1, ce2, ce3, and ce4), the temperature of the battery cell 100 may be divided into a first section (I1), a second section (12), and a third section (13) of the phase change material 330. The first section (I1) may be a section in which the temperature is maintained to be equal to or lower than the first point P1 by utilizing heat absorption through phase change. The second section (12) may be a section in which thermal runaway does not occur after liquid water 331 in the phase change material 330 vaporizes into gaseous water 332. An inclination of the change in temperature in the second section (12) may be greater than an inclination of the change in temperature in the first section (I1). The third section (I3) may be a section after the temperature of the battery cell 100 reaches the second temperature point P2, which is a thermal runaway start temperature. For example, the third section (I3) may be the temperature of a battery cell 100 in a state in which thermal runaway has occurred. The second temperature point P2 may be variably changed based on the material of the electrode assembly (e.g., the electrode assembly 120 of FIG. 1).

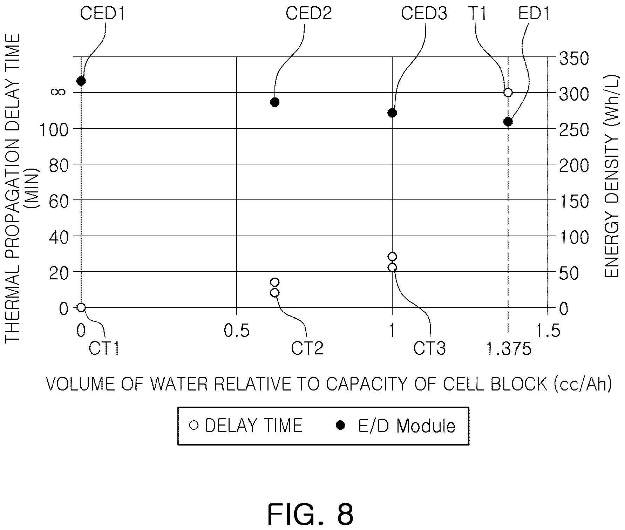

FIG. 8 is a graph illustrating a thermal runaway delay time according to a volume of water relative to a capacity of a cell block according to an embodiment.

Referring to FIG. 8, along with FIGS. 4 to 7, a temperature of the battery cell 100 may be changed based on a capacity of a phase change material 330 included in a barrier 300 and a time after the battery cell 100 is triggered (e.g., ignited). A thermal runaway (propagation) delay time may be changed based on the volume of water relative to the capacity of the cell block. The thermal runaway delay time may be the time to delay thermal runaway between cell blocks 102.

A delay time experiment example (T1) illustrates a thermal runaway delay time, in a cell assembly 101 in which the volume of the phase change material 330 (e.g., water 331 and 332) relative to the capacity of the cell block 102 is 1.375 (cc/Ah). In the delay time experiment example (T1), it was confirmed that the thermal runaway delay time was measured to be substantially infinite. For example, as the phase change material 330 of the barrier 330 is phase changed, heat generated by the cell block 102 may be absorbed. When the capacity of the water (331 and 332) included in the cell block 102 is equal to or greater than a specified size relative to the capacity of the battery cell 100, the temperature of the battery cell 100 is maintained below a second temperature point P2, and thermal runaway transfer between the plurality of cell blocks 102 may not occur.

A first delay time comparison experiment example (CT1) illustrates a thermal runaway delay time in a battery module (e.g., a battery module 200 not including a barrier 300) not including a phase change material 330 (e.g., water (331 and 332)). For example, in an embodiment, a capacity of one cell block 102 may be about 400 ampere hours (Ah).

A second delay time comparison experiment example (CT2) illustrates a thermal runaway delay time in a cell assembly 101 in which a volume of water relative to the capacity of the cell block 102 is about 0.625 (cc/Ah; cc per ampere hour). For example, in an embodiment, the capacity of one cell block 102 may be about 400 Ah, and the volume of the phase change material 330 may be about 250 cc.

A third delay time comparison experiment example (CT3) illustrates a thermal runaway delay time in a cell assembly 101 in which a volume of water relative to the capacity of the cell block 102 is about 1.000 (cc/Ah). For example, in an embodiment, the capacity of one cell block 102 may be about 400 Ah, and the volume of the phase change material 330 may be about 400 cc.

Referring to the delay time experiment example (T1) and the delay time comparison experiment example (CT1, CT2, and CT3), as the volume of water increases relative to the capacity of the cell block 102, the thermal runaway delay time may increase. Referring to the delay time experiment example (T1) and the delay time comparison experiment example (CT1, CT2, and CT3), when the volume of water relative to the capacity of the cell block 102 is equal to or greater than a specified size, thermal runaway or thermal propagation between the cell blocks 102 may not occur.

The volume of water (331 and 332) relative to the capacity of one of the plurality of cell blocks 102 may be 1,000 cc/Ah or more. When the volume of water (331 and 332) relative to the capacity of one of the plurality of cell blocks 102 is 1,000 cc/Ah or more, it was confirmed that thermal runaway between the cell blocks 102 does not occur. In an embodiment, the volume of water (331 and 332) relative to the capacity of one of the plurality of cell blocks 102 may be 1.000 cc/Ah to 1.375 cc/Ah. In an embodiment, the volume of water (331 and 332) relative to the capacity of one of the plurality of cell blocks 102 may be 1.2 cc/Ah. When the volume of water (331 and 332) relative to the capacity of one of the plurality of cell blocks 102 is 1.000 cc/Ah or more, thermal runaway between the cell blocks 102 may not occur. In an embodiment, the volume of water (331 and 332) relative to the capacity of one of the plurality of cell blocks 102 may be 1.375 cc/Ah or more. When the volume of water (331 and 332) relative to the capacity of one of the plurality of cell blocks 102 is 1.000 cc/Ah to 1.375 cc/Ah, thermal runaway between the cell blocks 102 may not occur.

In an energy density experiment example (ED1), it was confirmed energy density was measured at approximately 260 Wh/L (watt-hour per liter), in a battery module 200 in which the volume of water relative to the capacity of the cell block 102 was about 1.375 (cc/Ah). Energy density comparison experiment examples (CED1, CED2, and CED3) are examples for battery modules 200 in which the volume of water relative to the capacity of the cell block 102 was 0 (cc/Ah), 0.625 (cc/Ah), and 1.000 (cc/Ah), respectively. Referring to the energy density experiment example (ED1) and the energy density comparison experiment examples (CED1, CED2, and CED3), as the volume of water increases relative to the capacity of the cell block 102, the energy density of the battery module 200 may decrease. When the volume of water (331 and 332) relative to the capacity of one of the plurality of cell blocks 102 exceeds 1.375 cc/Ah, the energy density of the battery module 200 may decrease more than necessary.

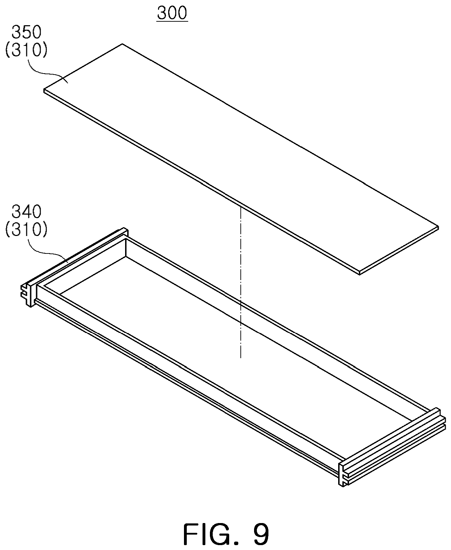

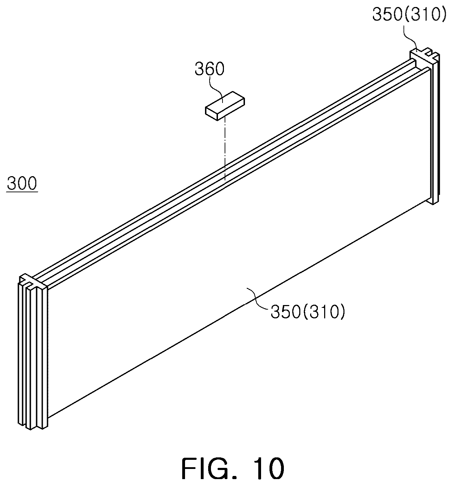

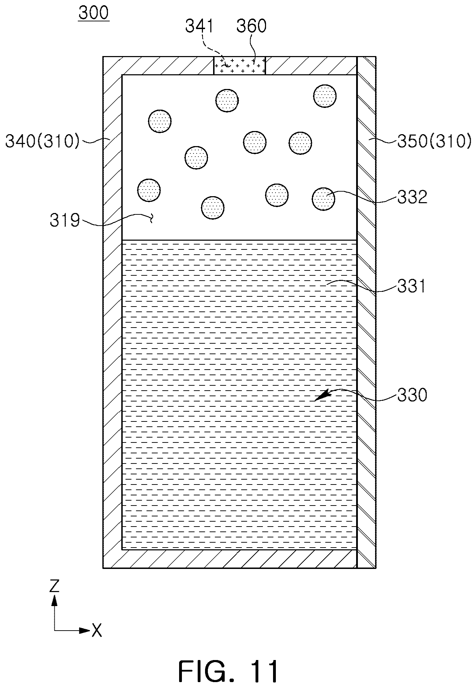

FIG. 9 is an exploded perspective view of a barrier according to another embodiment. FIG. 10 is a perspective view of a barrier according to another embodiment. FIG. 11 is a schematic cross-sectional view of a barrier according to another embodiment.

Referring to FIGS. 9, 10, and/or 11, a barrier 300 may include a rigid member 310, a phase change material 330, and a sealing member 360. At least a portion of the descriptions of the barrier 300, the rigid member 310, and the phase change material 330 of FIGS. 4 to 6 may be applied to the barrier 300, the rigid member 310, and the phase change material 330 of FIGS. 9, 10, and/or 11.

The rigid member 310 may have a shape for accommodating a phase change material 330 therein. For example, the rigid member 310 may include a phase change material accommodating portion 340 contacting the phase change material (330) and surrounding at least a portion of the phase change material 330, and a cover 350 covering the phase change material 330 and coupled to the phase change material accommodating portion 340. The phase change material accommodating portion 340 and the cover 350 may form an internal space 319 accommodating the phase change material 330.

The phase change material accommodating portion 340 and the cover 350 may be coupled to each other in a structure to prevent the phase change material 330 from leaking out or foreign substances from being introduced. In an embodiment, the phase change material accommodating portion 340 and the cover 350 may be coupled using welding (e.g., friction stir welding (FSW)). In an embodiment, the phase change material accommodating portion 340 and the cover 350 can be coupled using thermal fusion. In an embodiment, the phase change material accommodating portion 340 and the cover (350) may be formed integrally. For example, the phase change material accommodating portion 340 and the cover 350 may be manufactured using blow molding.

Since the phase change material accommodating portion 340 and the cover 350 are formed with a structure to prevent an outflow of the phase change material 330 or an introduction of foreign substances, the barrier 300 of FIGS. 9 to 11 may include an accommodating pouch (e.g., accommodating pouch 320 of FIG. 5) accommodating the phase change material 330. Since the barrier 300 does not include the accommodating pouch 320, a dead space and/or volume of the barrier 300 may be reduced, and the energy density of the battery module (e.g., battery module 200 of FIG. 2) may be increased.

The rigid member 310 may include an opening 341 for introduction of a phase change material 330 into the interior of the rigid member 310. The phase change material 330 may be introduced into an internal space 319 of the rigid member 310 through the opening 341. In an embodiment, the opening 341 may be a through-hole formed in the phase change material receiving portion 340. For example, the phase change material receiving portion 340 may include an opening 341 extending from the internal space 319 to the exterior of the rigid member 310. In another embodiment, the opening 341 may be a through-hole formed in the cover 350.

The barrier 300 may prevent the phase change material 330 from leaking out or foreign substance from being introduced into the rigid member 310. For example, the barrier 300 may include a sealing member 360 sealing the opening 341. The sealing member 360 may be disposed within the opening 341 after the phase change material 330 is introduced into the internal space 319 of the rigid member 310 through the opening 341. The sealing member 360 may be connected to the rigid member 310. In an embodiment, the sealing member 360 may be coupled (or bonded) to the rigid member 310. For example, the sealing member 360 may be welded (e.g., ultrasonically welded) to the phase change material receiving portion 340.

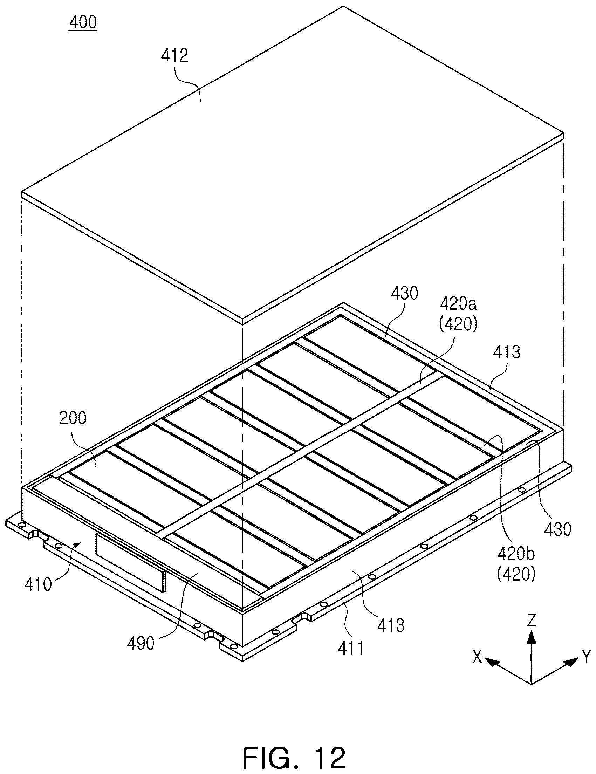

FIG. 12 is an exploded perspective view of a battery pack according to an embodiment.

Referring to FIG. 12, a battery pack 400 may include a plurality of battery modules 200 and a pack frame 410 accommodating the plurality of battery modules 200. The description of the battery module 200 described previously may be applied to the battery module 200 of FIG. 12. For example, the battery module 200 of FIG. 12 may include a cell assembly (e.g., the cell assembly 101 of FIG. 4) including the barrier 300 of FIGS. 5 to 6 or the barrier 300 of FIGS. 9 to 11.

The pack frame 410 may accommodate components of the battery pack 400 (e.g., battery module 200). The pack frame 410 may include a bottom member 411 supporting the battery module 200, a pack cover 412 covering the battery module 200, and a pack sidewall 413 surrounding at least a portion of the bottom member 411 and the pack cover 412. The bottom member 411 may support the battery module 200.

The pack frame 410 may include a partition wall 420 crossing at least a portion of the plurality of battery modules 200. For example, an accommodating space of the pack frame 410 may be divided into a plurality of spaces by the partition wall 420. A partition wall 420 may be installed to cross the accommodating space to reinforce the rigidity of the pack frame 410. In an embodiment, the partition wall 42o0 may include a first partition wall 420a crossing the plurality of battery cells 100 and a plurality of second partition walls 420b substantially perpendicular to the first partition wall 420a.

In an embodiment, the battery pack 400 may include a duct member 430. The duct member 430 may include a discharge space to provide a path for gas and/or flames discharged from the battery module 200. The duct member 430 may be disposed within the pack frame 410. The duct member 430 may surround at least a portion of the battery module 200. For example, gas and/or flames generated by a battery cell (e.g., battery cell 100 of FIG. 1) of the battery module 200 may be transmitted externally of the battery pack 400 through an exhaust space of the duct member 430. In the present disclosure, the duct member 430 may be referred to as an exhaust duct, or an exhaust member.

According to an embodiment, the battery pack 400 may include a pack cooling plate (not shown) for cooling the battery module 200. For example, at least a portion of heat generated in the battery cell 100 of the battery module 200 may be transferred to the pack cooling plate. At least a portion of the heat transferred to the pack cooling plate may be discharged externally of the battery pack 400 through the pack frame 410. The pack cooling plate may be a water-cooled or air-cooled cooling member. In an embodiment, the pack cooling plate may be disposed between a plurality of battery modules 200 and a pack frame 410. For example, the pack cooling plate may be disposed between the plurality of battery modules 200 and a bottom member 411 of the pack frame 410. As another example, the pack cooling plate may be disposed between a plurality of battery modules 200 and a pack cover 412.

The battery pack 400 may include a battery control unit 490 for controlling the battery module 200. The battery control unit 490 may be disposed within the pack frame 410. The battery control unit 490 may include a battery management system BMS. The configuration of the battery control unit 490 is known in various forms, so a detailed description thereof is omitted. In an embodiment, the battery control unit 490 may be referred to as a processor.

The structure of the battery pack 400 of FIG. 12 is exemplary. For example, the number of battery modules 200 included in the battery pack 400, the structure of the pack frame 410 and/or the duct member 430 may be designed selectively.

As set forth above, according to an embodiment of the disclosed technology, thermal runaway or thermal propagation between battery cells may be delayed or prevented.

According to an embodiment of the disclosed technology, an energy density of a battery module may be maintained or the energy density thereof may be prevented from being reduced, while thermal runaway is prevented.

The above-described description is merely an example of applying the principles of the present disclosure, and other configurations may be further included. Further, it may be implemented by deleting some components in the above-described embodiments, and each of the embodiments and modified examples may be implemented in combination with each other.

## Claims

1. A battery module, comprising:
a cell assembly including a plurality of cell blocks respectively including a plurality of battery cells, and a barrier disposed between the plurality of cell blocks; and
a module housing accommodating the cell assembly,
wherein the barrier includes a phase change material including water, and a rigid member accommodating the phase change material, and
the volume of water relative to a capacity of one of the plurality of cell blocks is 1.000 cc/Ah or more.

2. The battery module of claim 1, wherein the volume of water relative to the capacity of one of the plurality of cell blocks is 1.000 cc/Ah to 1.375 cc/Ah.

3. The battery module of claim 1 or claim 2, wherein the rigid member includes a first plate, and a second plate coupled to the first plate, and
the phase change material is disposed between the first plate and the second plate.

4. The battery module of claim 3, wherein the barrier is disposed between the first plate and the second plate, and includes an accommodating pouch surrounding the phase change material.

5. The battery module of any one of claims 1 to 4, wherein the rigid member includes a phase change material accommodating portion contacting the phase change material and surrounding at least a portion of the phase change material, and a cover covering the phase change material and coupled to the phase change material accommodating portion.

6. The battery module of claim 5, wherein the phase change material accommodating portion and the cover form an internal space for accommodating the phase change material,
the phase change material accommodating portion includes an opening extending from the internal space to the exterior of the rigid member, and
the barrier includes a sealing member sealing the opening.

7. The battery module of claim 5, wherein the cover is coupled to the phase change material accommodating portion by welding or thermal fusion.

8. The battery module of any one of claims 1 to 7, wherein each of the plurality of battery cells includes an electrode assembly, a pouch accommodating the electrode assembly, and an electrode tab electrically connected to the electrode assembly.

9. The battery module any one of claims 1 to 8,
wherein the plurality of cell blocks include a first cell block, a second cell block, and a third cell block spaced apart from each other, and
the barrier includes a first barrier disposed between the first cell block and the second cell block, and a second barrier disposed between the second cell block and the third cell block.

10. The battery module any one of claims 1 to 9, further comprising:
a cooling plate disposed between the cell assembly and the module housing.

11. A battery pack, comprising:
a plurality of battery modules; and
a pack frame accommodating the plurality of battery modules,
wherein the plurality of battery modules include a cell assembly including a plurality of cell blocks respectively including a plurality of battery cells, and a barrier disposed between the plurality of cell blocks; and
a module housing accommodating the cell assembly, respectively,
wherein the barrier includes a phase change material including water, and a rigid member accommodating the phase change material, and
the volume of water relative to a capacity of one of the plurality of cell blocks is 1.000 cc/Ah or more.

12. The battery pack of claim 11, further comprising:
a pack cooling plate disposed between the plurality of battery modules and the pack frame.
